# EUROPÄISCHE PATENTSCHRIFT

(11) **EP 3 085 730 B1**
(45) Veröffentlichungstag und Bekanntmachung des Hinweises auf die Patenterteilung: **14.10.2020**
(21) Anmeldenummer: 16170182.6
(22) Anmeldetag: 30.03.2010
(51) Int. Cl.: C08J 11/04, C08J 11/06, C08K 3/22

(54) **NEUTRALISIERUNG DURCH FÜLLSTOFF**
NEUTRALIZATION BY FILLER
NEUTRALISATION PAR CHARGE

(30) Priorität: 30.03.2009 AT 5042009
(43) Veröffentlichungstag der Anmeldung: 26.10.2016
(62) Teilanmeldung aus: 10714430.5
(73) Patentinhaber: EREMA Engineering Recycling Maschinen und Anlagen Gesellschaft m.b.H., 4052 Ansfelden (AT)
(72) Erfinder: Feichtinger, Klaus, 4040 Linz (AT); Hackl, Manfred, 4040 Linz-Urfahr (AT); Wendelin, Gerhard, verstorben (AT)
(74) Vertreter: Wildhack & Jellinek

(56) Entgegenhaltungen:
- EP-A1- 1 849 822
- WO-A1-03/004236
- JP-A- 2001 191 051
- JP-A- 2008 088 285

## Beschreibung

Die vorliegende Erfindung betrifft ein Verfahren gemäß Anspruch 1.

Kunststoffen werden im Verlauf ihres Herstellungsprozesses bzw. im Zuge der Compoundierung oft diverse Additive bzw. Zuschlagstoffe zugesetzt. Diese Additive dienen der Einstellung der Materialeigenschaften auf die Bedürfnisse der jeweiligen Anwendung und der Verbesserung der chemischen, elektrischen oder mechanischen Eigenschaften. Zu der Gruppe der Additive bzw. Zuschlagstoffe zählen beispielsweise Weichmacher, Stabilisatoren, Farbstoffe, Verstärkungsstoffe und auch Füllstoffe.

Unter dem Begriff der Füllstoffe werden in der Regel, und auch im vorliegenden Text, Stoffe verstanden, die man Kunststoffen beimischt, um deren Volumen und/oder deren Gewicht zu erhöhen. Füllstoffe werden üblicherweise in größeren Mengen bzw. Gew% zugegeben. Füllstoffe sind somit in erster Linie klassische Streckmittel, die einen nicht unwesentlichen Anteil am Endprodukt ausmachen und die Herstellung des Kunststoffes verbilligen. Aktive Füllstoffe verbessern zusätzlich die mechanischen Eigenschaften des Materials. Weitere Bezeichnungen für Füllstoffe sind Füllmittel, Streckungsmittel oder Extender.

Mit dem Begriff des klassischen Füllstoffs werden auch gewisse Eigenschaften des zugesetzten Stoffes selbst impliziert. So ist ein klassischer Füllstoff in aller Regel pulverförmig, relativ inert, relativ preiswert sowie gut verfügbar.

In der kunststoffverarbeitenden Industrie hat sich ein Verständnis dafür herausgebildet, was üblicherweise als Füllstoff bezeichnet wird. Flüssige Stoffe, reaktive Stoffe etc. werden in der Branche definitiv nicht als Füllstoffe bezeichnet.

Gängige Füllstoffe sind unter anderem Kreide, Sand, Kieselgur, Glasfasern, Zinkoxid, Quarz, Holzmehl, Stärke, Graphit, Russe, Talkum und Carbonate, insbesondere Calciumcarbonat.

Aus dem Stand der Technik sind zahlreiche Kunststoffe bzw. Polymere bekannt, die mit einem Füllstoff, beispielsweise einem inerten mineralischen Pulver, gefüllt sind. Auch sind zahlreiche Verfahren bekannt, mit denen Füllstoffe in ein Polymer eingebracht werden können. So können die Füllstoffe beispielsweise in eine Kunststoffschmelze zugegeben werden. Weiters besteht die Möglichkeit einer "kalten Mischung", wobei der Kunststoff und die Füllstoffe bei niedrigen Temperaturen miteinander gemischt werden und anschließend die Mischung erwärmt und aufgeschmolzen wird. Außerdem ist beispielsweise in der EP 1401623 beschrieben, dass das Polymermaterial zuerst in einen erweichten Zustand gebracht wird und erst dann die Füllstoffe zugegeben werden.

Bei all diesen Verfahren ist es Ziel, dass der klassische Füllstoff die von ihm erwartete Wirkung bestmöglich entfalten kann, beispielsweise indem er sich gleichmäßig im Polymer verteilt. Dadurch kann dann die optimale Füll- bzw. Streckwirkung erzielt werden. Typischerweise werden auf diese Weise etwa 20 bis 60 Gew.-% Füllstoffe zu einem Polymer zugegeben, wodurch sich das Endprodukt verbilligt.

Bei der Verarbeitung, Aufbereitung bzw. Recyclierung von Kunststoffen besteht allerdings ein Problem, das gerade durch die großen Mengen an zugegebenen Hilfs- und Zusatzstoffen verstärkt wird. Üblicherweise wird das vorliegende Kunststoffmaterial im Zuge der Aufbereitung zunächst erwärmt, bis es schließlich aufschmilzt und verarbeitet bzw. extrudiert werden kann. Problematisch dabei ist, dass in der Regel bei der Recyclierung keine *reinen* Kunststoffe vorliegen, sondern nur "compoundierte" Kunststoffe, und dass die Kunststoffe durch die oben genannten Zusatzstoffe, aber auch durch andere Substanzen, "verunreinigt" sind.

Bei solchen externen "Verunreinigungen", das heißt bei Stoffen, die dem Polymer bewusst zugegeben wurden oder die unbewusst, insbesondere durch Gebrauch dem Polymer anhaften, kann es sich um organische oder anorganische Stoffe handeln. Insbesondere sind hierbei Klebstoffe, z.B. Acrylate oder Vinylacetate, zu nennen, weiters Druckfarben, z.B. Farbstoffe oder Pigmente, die bei der Bedruckung von z.B. Polymerfolien eingesetzt werden, organische Verunreinigungen durch Lebensmittelreste etc. All diese externen Verunreinigungen sind zumeist thermisch sensibel und zersetzen sich bei erhöhter Temperatur, das heißt beim Aufwärmen oder Aufschmelzen.

Aber auch die Kunststoffe selbst können sensibel sein, beispielsweise gegen Oxidation, Strahlung bzw. Licht oder Wärme. Diese Faktoren können zu einer Zersetzung der Polymerketten oder zu anderen Abbaureaktionen führen. Insbesondere ist bekannt, dass manche Kunststoffe empfindlich gegenüber Wärmeeinwirkung sind. Oberhalb einer für das jeweilige Material charakteristischen Temperatur, nämlich der Zersetzungstemperatur, tritt der Zerfall der molekularen Struktur der Polymerketten ein. All diese "inneren" Reaktionen werden in der Regel durch Zusatz von Stabilisatoren, beispielsweise Lichtschutzmittel, Wärmestabilisatoren, Flammschutzmittel etc., zu vermindern versucht. Bei Stabilisatoren handelt es sich um chemisch aktive und reaktive Substanzen, die durch ihre Reaktivität die Zerfallsmechanismen unterbrechen oder deren Reaktionsgeschwindigkeit verlangsamen. So komplexieren beispielsweise Wärmestabilisatoren, insbesondere organische Barium-, Zink-, Zinn- und Cadmiumverbindungen oder anorganische Bleisalze, die sensiblen Doppelbindungen der Polymerketten und schützen sie auf diese Weise vor dem Zerfall.

In der Praxis ist es nicht immer möglich die Verfahrensparameter, insbesondere die Verarbeitungstemperatur, dem sensibelsten Bestandteil anzupassen. So zersetzen sich beispielsweise organische Pigmente, Druckfarben oder Bindemittel der Farbe bereits bei etwa 120 °C, die Verarbeitungstemperatur der meisten Polymere liegt fast immer weit darüber, beispielsweise bei über 220 °C. Vor allem der abschließenden Extrusion, bei der das Material unter hohem Druck und bei hoher Temperatur aufgeschmolzen wird, können die meisten organischen Additive nicht mehr standhalten und zersetzen sich spätestens dann.

Durch diese Vorgänge, d.h. sowohl durch die Zersetzung der externen "Verunreinigungen" als auch durch die inneren Abbaureaktionen des Kunststoffs selbst kommt es zur Bildung von Abbau- bzw. Zersetzungsprodukten. Diese wirken sich bekanntermaßen auf die Qualität des Endproduktes negativ aus und stören die Kunststoffmatrix bzw. führen zu Verfärbungen, Blasenbildung oder anderen Materialfehlern.

Unter diesen Zersetzungsprodukten befinden sich aber auch Verbindungen, die basisch oder sauer wirken, z.B. Salzsäure, Salpetersäure oder Essigsäure. Diese Verbindungen beeinträchtigen nicht nur die Qualität des Endproduktes selbst, sondern stellen für die im Zuge der Aufbereitung bzw. Recyclierung verwendeten, und in der Regel sehr teuren, Maschinen ein Problem, z.B. in Form einer korrosiven Bedrohung, dar. Diese Bedrohung existiert in jeder Stufe der Verarbeitung, beginnend bei der Erwärmungsphase im Schneidverdichter, aber auch in nachfolgenden Anlagen der Verarbeitungskette, z.B. im Extruder, und zwar vor allem dort, wo heiße Säure mit den metallischen Oberflächen der Geräte oder mit Geräteteilen in Berührung kommt. Wenn qualitativ minderwertige und nicht entsprechende Endprodukte noch relativ unproblematisch und ohne größere Kosten entsorgt werden können, so ist dies bei ganzen Vorrichtungen nicht möglich ohne die gesamte Produktion zu stoppen und auch der Austausch von Ersatzteilen ist zeitaufwändig und bei solchen Vorrichtungen sehr kostspielig.

In der JP 2001 191051 ist ein Verfahren beschrieben, um die Bildung von Salzsäure im Verlauf der Aufbereitung von recyclierten Kunstoffen zu vermeiden. Dort werden z.B. recyclierten Polypropylenteilchen mit Calciumcarbonat gemischt, wobei das Calciumcarbonat allerdings in der Polymerschmelze zugegeben wird.

In der JP 2008 088285 ist ein Verfahren beschrieben, bei dem Abfallmaterialien die Polyvinylchlorid enthalten mit Calciumcarbonat gemischt werden.

In der EP 1 849 822 A1 ist ebenfalls ein Verfahren beschrieben, um die Bildung von Salzsäure im Verlauf der Aufbereitung von recyclierten Kunststoffen zu vermeiden. Hierbei wird ein Füllstoff über einen Masterbatch zugegeben wird um die sich bildende Salzsäure zu neutralisieren. Der Füllstoff ist dabei in einer Polymermatrix enthalten.

Es ist somit Aufgabe der vorliegenden Erfindung, dieses Problem zu lösen, und die Haltbarkeit der bei der Recyclierung von Kunststoffen eingesetzten Vorrichtungen zu verlängern.

Insbesondere ist es Aufgabe ein Verfahren zur Neutralisierung von, im Zuge der Aufbereitung und Recyclierung von thermoplastischen, gegen hydrolytischen Abbau empfindlichen und hygroskopischen Polyester-Kunststoffen, insbesondere PET, entstehenden sauren und/oder basischen Abbau- bzw. Zersetzungsprodukten von Druckfarben, Klebstoffen oder organischen Verunreinigungen zu schaffen.

Diese Aufgabe wird durch die Verfahrensführung gemäß Anspruch 1 gelöst.

Anspruch 1 betrifft ein derartiges Verfahren zur Neutralisierung von entstehenden sauren und/oder basischen Abbau- bzw. Zersetzungsprodukten, wobei in einem ersten Schritt das zu recyclierende Polymermaterial in einem mit einer Misch- bzw. Zerkleinerungseinrichtung ausgestatteten Schneidverdichter vorgelegt wird und anschließend die Polymerteilchen im Schneidverdichter permanent bewegt und erwärmt werden.

Zur Neutralisierung der entstehenden Abbau- bzw. Zersetzungsprodukte zu dem erweichten aber noch nicht aufgeschmolzenen Polymer wird zumindest ein fester, pulverförmiger, insbesondere mineralischer, Füllstoff, der üblicherweise zur Streckung bzw. als Streckmittel verwendet wird, beispielsweise Kreide, Kieselgur, Zinkoxid, Talkum, Aktivkohle und/oder ein Carbonat, insbesondere Calciumcarbonat, zugegeben.

Zumindest eine Teilmenge, vorzugsweise die gesamte Menge, des Füllstoffs wird zu dem auf eine Temperatur von über 30°C unterhalb seines VICAT-Erweichungspunktes gemessen mit einer Prüfkraft von 10 N, jedoch noch unterhalb seines Schmelzpunktes, erwärmten Polymers zugegeben, und zwar in einer Menge, die zumindest der zu erwartenden Säure- oder Basenbelastung entspricht, wobei die Mischung für eine bestimmte Verweilzeit permanent gemischt, bewegt, und gegebenenfalls zerkleinert, und stückig bzw. freifließend gehalten wird.

Dabei werden chemische Trocknungsmittel oder mechanische Mittel zur Reduzierung der Restfeuchtigkeit in der Mischung und des hydrolytischen Abbaus der Polyester-Kunststoffe eingesetzt, wobei die Restfeuchte unter 100 ppm reduziert wird, wobei die Behandlung in einem evakuierbaren Schneidverdichter unter Vakuumbedingungen von ≤ 150 mbar erfolgt, und wobei das Material nach der Aufbereitung einem Verdichtungsschritt, insbesondere einem Aufschmelzen bzw. einer Extrusion, unterzogen wird.

Die Menge der zugegebenen Füllstoffe liegt bei etwa 0,1 bis 15 Gew%, vorzugsweise zwischen 1 und 10 Gew%, wobei sich die Angaben in Gew% auf das Gesamtgewicht der Mischung aus Polymer und Füllstoffen beziehen, und wobei als Füllstoff ein Füllstoff mit einer mittleren Korngröße bzw. einem D 50 Wert von weniger als 50 µm, insbesondere zwischen 2 und 15 µm, und mit einer spezifischen Oberfläche von 2 bis 11 m²/g, insbesondere 5 bis 9 m²/g, eingesetzt wird.

Die Erfindung basiert dabei auf der überraschenden Erkenntnis, dass durch die bewusste Zugabe von klassischen Füllstoffen in gewissen Mengen der pH-Wert einer erwärmten Kunststoffmischung reguliert werden kann bzw. die kritischen Abbau- bzw. Zersetzungsprodukte neutralisiert werden. Diese Funktionalität von klassischen Füllstoffen, nämlich die Tatsache, dass man Füllstoffe nicht nur zur Füllung bzw. Streckung von Polymeren einsetzen kann, war bislang noch nicht bekannt.

In diversen Versuchen hat sich gezeigt, dass durch die Zugabe von klassischen Füllstoffen saure und basische Verbindungen effektiv neutralisiert werden können, wodurch in weiterer Folge die Korrosion abnimmt und die Lebensdauer der Maschinen steigt. Diverse Vergleichsversuche haben das überraschende Ergebnis gebracht, dass bei der erfindungsgemäßen Verfahrensführung, sogar bereits nach relativ kurzer Zeit, die Korrosion deutlich abnimmt und insbesondere die Metallteile merklich weniger angegriffen wurden. Auch konnte durch die Versuche gezeigt werden, dass die beweglichen Teile der Vorrichtung, z.B. die Extruderschnecke oder der Mischer, einem geringeren Verschleiß unterliegen, als dies sonst der Fall wäre.

Vor allem in praktischer Hinsicht ist die erfindungsgemäße Verfahrensführung interessant, da man in der Regel darüber Bescheid weiß, inwieweit die Materialien, die recycliert werden sollen, verunreinigt sind bzw. ob es sich um stark oder schwach verunreinigte Polymere handelt bzw. um Polymere, die große Mengen an sauren oder basischen Zersetzungsprodukten freigeben. Um die bei der späteren Temperaturerhöhung erwartungsgemäß freigesetzten bzw. entstehenden Zersetzungsprodukte zu neutralisieren, kann man nun erfindungsgemäß bewusst eine gewisse abgestimmte Menge eines Füllstoffs zugeben. Dies stellt darüber hinaus eine sehr effektive und preiswerte Maßnahme dar, da die klassischen Füllstoffe in der Regel preiswert sind, leicht verfügbar sind und außerdem sehr effektiv wirken, da sie eine große Oberfläche aufweisen. Die Kosten für die dafür eingesetzten Füllstoffe sind deutlich geringer, als der Schaden, der durch Korrosion an Maschinenteilen in der Verarbeitungskette auftreten würde. Außerdem lassen sich klassische Füllstoffe sehr leicht nach bekannten Verfahren in das Polymer einarbeiten und gleichmäßig darin verteilen und verschlechtern die Eigenschaften des Materials nicht. Nicht zuletzt wird dadurch auch der pH-Wert im gesamten Verlauf der Aufbereitung möglichst gleichmäßig im neutralen Bereich gehalten, und starke Schwankungen des pH-Werts werden im Verlauf der Aufbereitungskette vermieden, wodurch auch die Qualität des Endproduktes steigt.

Es ist vorteilhaft, dass als Füllstoff ein fester, pulverförmiger, insbesondere mineralischer, Stoff, der üblicherweise zur Streckung bzw. als Streckmittel verwendet wird, beispielsweise Kreide, Sand, Kieselgur, Glasfasern, Zinkoxid, Quarz, Holzmehl, Stärke, Graphit, Russe, Talkum, Aktivkohle und vorzugsweise ein Carbonat, insbesondere Calciumcarbonat, eingesetzt wird. Diese Füllstoffe sind in der Regel leicht verfügbar, entsprechend preisgünstig, leicht wiegbar und dosierbar, lange lagerfähig und auch für die Neutralisierung vorteilhaft.

Weiters ist es vorteilhaft, dass als Füllstoff ein Füllstoff mit einer mittleren Korngröße bzw. einem D 50 Wert von weniger als 50 µm, insbesondere zwischen 2 und 15 µm, und/oder mit einer spezifischen Oberfläche von 2 bis 11 m²/g, insbesondere 5 bis 9 m²/g, eingesetzt wird. Derartige Füllstoffe sind besonders effektiv, können gut im Polymer dispergiert werden und verteilen sich optimal, wodurch eine gleichmäßige homogene Verteilung im Polymer sichergestellt ist und eine effektive durchgehende Neutralisierung gewährleistet ist.

Weiters ist es vorteilhaft, einen preisgünstigen Füllstoff vorzusehen, der oberflächlich unbehandelt ist und frei von einer Beschichtung, z.B. mit Stearinsäure, ist.

Weiters ist es vorteilhaft,, dass die Menge bzw. der Durchsatz der zugegebenen Füllstoffe bei etwa 0,1 bis 15 Gew%, vorzugsweise zwischen 1 und 10 Gew%, liegt, wobei sich die Angaben in Gew% auf das Gesamtgewicht der Mischung aus Polymer und Füllstoffen beziehen. Es hat sich herausgestellt, dass in der Regel geringere Mengen für die Neutralisierung ausreichend sind, als üblicherweise für die Erzielung der klassischen Streck- bzw. Füllwirkung eingesetzt werden.

Weiters ist es vorteilhaft, wenn der Füllstoff in Pulverform oder in Form eines in einer Polymermatrix gebundenen Konzentrats in granulierter Form zugegeben wird. Auf diese Weise kann der Füllstoff gut dosiert werden und die gewünschte Menge kontrolliert ins Polymer eingebracht werden.

Weiters ist es vorteilhaft,, dass in einem ersten Schritt das zu recyclierende Polymermaterial in einem mit einer Misch- bzw. Zerkleinerungseinrichtung ausgestatteten, gegebenenfalls evakuierbaren Aufnahmebehälter bzw. Reaktor vorgelegt wird, anschließend zumindest eine Teilmenge des Füllstoffs zu dem noch nicht erwärmten Polymer zugegeben wird, und/oder zumindest eine Teilmenge des Füllstoffs zu dem auf eine Temperatur von maximal 30°C unterhalb seines VICAT-Erweichungspunktes (10 N) erwärmten Polymers zugegeben wird.

Insbesondere ist es vorteilhaft, wenn zumindest eine Teilmenge, vorzugsweise die gesamte Menge, des Füllstoffs zu dem auf eine Temperatur von über 30°C unterhalb seines VICAT-Erweichungspunktes (10 N), jedoch noch unterhalb seines Schmelzpunktes, erwärmten Polymers zugegeben wird, wobei die Mischung, gegebenenfalls unter Vakuumbedingungen von ≤ 150 mbar, für eine bestimmte Verweilzeit im Schneidverdichter permanent gemischt, bewegt und gegebenenfalls zerkleinert und stückig gehalten wird.

Insbesondere ist es vorteilhaft, wenn die gesamte Füllstoffmenge zu dem erweichten und noch nicht aufgeschmolzenen Polymer zugegeben wird. Auf diese Weise kann sich einerseits der Füllstoff sehr frühzeitig in Polymer verteilen und eine homogene Mischung ausbilden. Zudem klebt der Füllstoff an den erweichten Oberflächen der Polymerflakes an, sobald das Pulver mit dem Polymer in Kontakt kommt, wodurch ebenfalls eine effektive Verteilung gewährleistet ist. Ein wesentlicher Teil der Säuren- und Basenverbindungen entsteht oft erst bei erhöhter Temperatur, insbesondere während der Aufschmelzung. Jedoch bereits während der Aufbereitungsphase im Schneidverdichter zersetzen sich manche Zusatzstoffe, insbesondere organische Farbstoffe aus oberflächlichen Bedruckungen. Aus diesem Grund ist es vorteilhaft, wenn der Füllstoff nicht erst im Extruder, das heißt in die Schmelze oder unmittelbar davor, zugegeben wird, sondern bereits ganz zu Beginn vorliegt, um der beginnenden Zersetzung möglichst frühzeitig entgegenzuwirken und die entsprechenden Zersetzungsprodukte gleich am Anfang zu neutralisieren. Die Säuren und Basen werden somit unmittelbar nach ihrem Entstehen wieder entfernt und der pH-Wert wird im gesamten Verlauf der Aufbereitung möglichst gleichmäßig im neutralen Bereich gehalten, was starke Schwankungen des pH-Werts im Verlauf der Aufbereitungskette vermeidet und insgesamt die Qualität des Materials erhöht.

Wie gesagt, wird ein wesentlicher Anteil der Säuren und Basen erst bei noch höherer Temperatur im Extruder gebildet. Erfahrungsgemäß ist die Zufütterung eines Füllstoffes im Einzugsbereich des Extruders zwar möglich, doch muss dann der Füllstoff in relativ kurzer Zeit, aber dennoch gleichmäßig, im Inneren des Extruders im Polymer verteilt werden. Vorteilhaft ist es, wenn eine bereits homogene Mischung von Polymer und Füllstoff zum Extruder gelangt und dort aufgeschmolzen wird. Auf diese Weise wird das neutralisierende Pulver noch schneller und besser im aufschmelzenden Polymer verteilt und ist bereits vor Ort, wenn die Temperatur steigt und die Zersetzungsprodukte, das heißt die Säuren und Basen, verstärkt gebildet werden.

In der Regel läuft das erfindungsgemäße Verfahren unter Normaldruck bzw. in einem klassischen Schneidverdichter, der nicht zwingend evakuierbar bzw. nicht vakuumtauglich ausgebildet sein muss, ab. Dies ist in der Regel bei unempfindlicheren Polymeren, wie z.B. PE, PP etc., der Fall.

Bei bestimmten Polymeren, insbesondere bei gegen hydrolytischen Abbau empfindlichen und gegebenenfalls hygroskopischen Polymeren, wie z.B. Polyestern, insbesondere bei PET, ist es allerdings vorteilhaft, wenn das Verfahren so geführt wird, dass Mittel zur Reduzierung der Restfeuchtigkeit und/oder zur Verhinderung der Oxidation eingesetzt werden.

Dies ist deshalb vorteilhaft, da die molekulare Struktur von PET durch bestimmte Faktoren zerstört werden kann:
Ein erster Abbaumechanismus wird durch thermischen Abbau der Molekülketten bewirkt. Dabei werden die Bindungen zwischen den einzelnen Molekülen durch zu große Erwärmung zerstört. Aus diesem Grund ist eine entsprechende Verweilzeit und eine geeignete Bearbeitungstemperatur zu beachten, um ein qualitativ hochwertiges Produkt zu erzielen.

Ein zweiter sehr relevanter Abbaumechanismus ist der hydrolytische Abbau, d.h. PET ist, so wie andere Polykondensate, anfällig gegenüber Wasser bzw. Feuchtigkeit.

Das Wasser bzw. die Feuchtigkeit kommt im wesentlichen aus zwei Quellen: Einerseits hat PET eine hygroskopische Struktur, d.h. PET absorbiert die Feuchtigkeit. Diese wird in den intermolekularen Zwischenräumen eingelagert und verbleibt als sogenannte innere Feuchte im Polymer selbst bzw. in dessen Inneren. Die innere Feuchte des originären Polymers ist abhängig von den jeweiligen Umgebungsbedingungen. PET hat eine gewisse innere Gleichgewichtsfeuchte, die in den gemäßigten Breiten bei ca. 3000 ppm liegt.

Außerdem liegt zusätzliche Feuchtigkeit an der äußeren Oberfläche des Polymers bzw. der Polymerflakes vor (äußere Feuchte), die bei der Bearbeitung ebenfalls beachtet werden muss.

Ist bei der Bearbeitung bzw. während des Recyclings oder der Extrusion von PET zuviel Feuchtigkeit vorhanden - egal aus welcher Quelle -, werden die Polymerketten des PET hydrolytisch gespalten und es werden in einer chemischen Reaktion teilweise wieder die Ausgangsprodukte, nämlich Terephtalsäure und Ethylenglykol gebildet. Dieser hydrolytische Abbau der Kettenlänge der Moleküle führt zu einem starken Viskositätsabbau sowie einer Verschlechterung der mechanischen Eigenschaften des Endproduktes bzw. zu nachteiligen Veränderungen der Kunststoffeigenschaften. Die Schädigung kann sogar so hoch sein, dass sich das Material nicht mehr für die Verarbeitung von Flaschen, Folien etc. verwenden lässt.

Polyester ist vor allem bei erhöhter Temperatur besonders empfindlich auf Feuchtigkeit, vor allem Polymerschmelzen bei ca. 280°C reagieren extrem schnell mit Wasser und PET wird innerhalb von Sekunden abgebaut. Um PET beim Recycling wieder aufzubereiten, muss dem Material allerdings notwendigerweise Energie in Form von Wärme zugeführt werden, insbesondere bei der abschließenden Extrusion.

Um das Polykondensat somit vor hydrolytischem Abbau zu schützen und die Polymerketten zu erhalten, muss dem Material vor der Wiederaufbereitung bzw. vor einer zu starken Erhöhung der Temperatur möglichst alle Feuchtigkeit entzogen werden und auf eine geeignete Einstellung der Temperatur und der Verweilzeit während der Bearbeitung geachtet werden.

Soll somit beispielsweise feuchtes PET bearbeitet bzw. aufbereitet werden und wird dieses PET in einen Schneidverdichter eingebracht, so muss durch geeignete Maßnahmen versucht werden, eine hydrolytische Schädigung des Polyesters zu unterbinden. Um ein qualitativ entsprechendes Endprodukt zu erhalten, ist es somit beim Recycling bzw. bei der Bearbeitung von sensiblen Polykondensaten, wie Polyestern, erforderlich, die innere Feuchte sowie die auf der Oberfläche des Kunststoffes anhaftende äußere Feuchte möglichst zu reduzieren. Erst durch eine entsprechende Trocknung, insbesondere unter 100 ppm, hält sich der hydrolytische Abbau in Grenzen.

Dazu stehen verschiedene verfahrenstechnische Möglichkeiten zur Verfügung. So kann beispielsweise versucht werden, die am Kunststoff anhaftende äußere Feuchte durch Anlegen eines Vakuums oder durch Erhöhung der Temperatur zu entfernen.

Dabei müssen allerdings auch andere verfahrenstechnische Probleme berücksichtigt werden. So neigt beispielsweise amorphes und auch teilkristallines PET dazu, bei Erwärmung zu verkleben, was in der Praxis ebenfalls ein großes Problem darstellt. Dieses Problem kann nur durch ständiges Rühren gelöst werden.

Weiters ist darauf zu achten, dass manche Kunststoffsorten anfällig gegenüber oxidativen Abbauprozessen sind, wodurch ebenfalls die Kettenlänge der Kunststoffmoleküle reduziert wird, was ebenfalls nachteilige Veränderungen der Eigenschaften der Kunststoffe, wie z.B. der Farbe, der Festigkeit, etc. zur Folge haben kann. Um wiederum diesen oxidativen Abbau zu verhindern, besteht die Möglichkeit, die Bearbeitung derartiger sensibler Kunststoffe, unter Vermeidung von Luft, z.B. unter Inertgasatmosphäre durchzuführen.

Die effiziente und wirtschaftliche Aufbereitung von Polykondensaten bzw. Polyestern ist somit u.a. aufgrund der zahlreichen Abbauprozesse, die es zu beachten gilt, äußerst problematisch und erfordert eine spezielle Verfahrensführung. Dies alles gestaltet das Recycling von Polykondensaten, insbesondere von Polyestern und ganz insbesondere von PET, besonderes problematisch und heikel, so dass überhaupt erst mit der Entwicklung von speziellen Verfahrensführungen ein wirtschaftliches Recycling derartiger Kunststoffe möglich wurde.

Dies gilt selbstverständlich auch für die Herstellung von mit Füllstoffen gefüllten Polykondensaten bzw. Polyestern. Zusätzlich ist bei gefüllten Polykondensaten allerdings zu berücksichtigen, dass nicht nur über das Polymer, sondern auch durch die Füllstoffe selbst große Mengen an zusätzlicher Feuchtigkeit eingebracht werden, die sich negativ auf die Kettenlänge auswirkt. So besitzt beispielsweise Calciumcarbonat eine sehr große spezifische Oberfläche und bindet große Mengen an Feuchtigkeit, und zwar über 1000 ppm bei 20° und 60% Luftfeuchte.

Die Reduzierung der Feuchte ist auch vorteilhaft, um zu verhindern, dass saure oder basische Abbauprodukte überhaupt erst entstehen.

Als Mittel zur Reduzierung der Feuchtigkeit können somit mechanische Mittel eingesetzt werden, z.B. Vortrockner, Vakuumanlagen od. dgl. bzw. entsprechend trockene Ausgangsmaterialien verwendet werden bzw. die Verweilzeiten der Aufbereitung ausreichend lang gestaltet werden.

Gemäß einer bevorzugten Ausführungsform können als Mittel zur Reduzierung der Feuchtigkeit auch chemische Trocknungsmittel, insbesondere Calciumoxid, eingesetzt werden, wobei sich die eingesetzte Menge nach der zu erwarteten Restfeuchte richtet, wobei die Menge bzw. der Durchsatz an Calciumoxid in einem Bereich zwischen 0,01 und 3 Gew%, vorzugsweise zwischen 0,1 und 1 Gew%, der Gesamtmischung liegt. Calciumoxid bzw. gebrannter bzw. ungelöschter Kalk reagiert mit Wasser unter starker Wärmeentwicklung. Dadurch und durch seine mechanischen Eigenschaften ist es zur Entfernung von Feuchte gut geeignet.

In diesem Zusammenhang ist es besonders vorteilhaft, wenn vorgesehen ist, dass das chemische Trocknungsmittel zeitgleich mit dem Füllstoff dem Polymer zugegeben wird, insbesondere dass Calciumoxid gemeinsam mit Calciumcarbonat dem Polymer zugegeben wird. Auf diese Weise kann die Reduzierung der Restfeuchtigkeit sowie die Neutralisierung effektiv miteinander kombiniert werden. Bei der Reaktion von Calciumoxid mit Restwasser entsteht beispielsweise Calciumhydroxid, also gelöschter Kalk, in Form eines weißen Pulvers. Sowohl Calciumoxid als auch Calciumhydroxid sind allerdings stark basisch. Gerade in diesem Zusammenhang ist es somit vorteilhaft, wenn Calciumoxid gemeinsam und zeitgleich mit Calciumcarbonat zugegeben wird, da auf diese Weise unmittelbar eine Neutralisierungswirkung erfolgen kann. Gleiches gilt auch für andere Kombinationen aus Trocknungsmittel und klassischem Füllstoff. Auf diese Weise kann ein kombinatorischer Effekt aus Neutralisierung und Trocknung gleichzeitig erreicht werden.

Die notwendigen Mengen von Calciumoxid sind sehr gering, wodurch angesichts der geringern Kosten des Produktes selbst auch insgesamt keine wesentlichen Erhöhung der Kosten für die Aufbereitung eintritt. In jedem Fall wäre der potentielle Schaden durch Korrosion an den Maschinen höher als die allfälligen Kosten allfälliger Zusatzstoffe.

Die Abbau- bzw. Zersetzungsprodukte werden einerseits durch thermischen, oxidativen und/oder photochemischen bzw. strahlungsinduzierten Abbau der Polymere selbst, z.B. von Sperrschichtlaminaten in Mehrschichtfolien, z.B. Ethylenvinylacetat (EVA), Ethylenvinylalkohol (EVOH), Polyvinylidenchlorid (PVDC) etc., gebildet. Außerdem werden sie durch Abbau der im zu recyclierenden Polymer enthaltenen Additive oder Hilfsstoffe, insbesondere durch Klebstoffe, Druckfarben etc., gebildet.

Insbesondere handelt es sich bei den besonders korrosiven Verbindungen um saure Verbindungen, nämlich anorganische Säuren, z.B. Salzsäure, oder organische Säure, z.B. Essigsäure.

Weiters ist vorteilhafterweise vorgesehen, dass das Material nach der Aufbereitung einem Verdichtungsschritt, insbesondere einem Aufschmelzen bzw. einer Extrusion, unterzogen wird.

Um das erfindungsgemäße Verfahren in vorteilhafter Weise durchführen zu können, kann beispielsweise eine Vorrichtung eingesetzt werden, die einen Aufnahmebehälter bzw. Reaktor bzw. Schneidverdichter für das zu bearbeitende Kunststoffgut aufweist, dem das zu behandelnde Polymergut durch eine Einbringöffnung zugeführt und aus dem das Gut durch zumindest eine an die Seitenwand des Behälters angeschlossene Schnecke ausgebracht wird, wobei im Bodenbereich des Behälters zumindest ein um eine vertikale Achse drehbares Misch-Werkzeug angeordnet ist und die Einzugsöffnung der Schnecke zumindest annähernd auf der Höhe des Werkzeuges liegt.

Das zu behandelnde Kunststoffmaterial wird dabei in diesem Aufnahmebehälter bzw. Reaktor vorgelegt und unter ständiger Mischung bzw. Bewegung und/oder Zerkleinerung bei erhöhter Temperatur behandelt. Zur Mischung und Erwärmung des Kunststoffmaterials ist im Reaktor zumindest ein, gegebenenfalls auf mehreren übereinanderliegenden Ebenen angeordnetes, um eine vertikale Achse drehbares Zerkleinerungs- bzw. Mischwerkzeug, mit auf das Gut zerkleinernd und/oder mischend einwirkenden Arbeitskanten, angeordnet. Durch diese Zerkleinerungs- bzw. Mischwerkzeuge wird das Polymermaterial mit mechanischer Energie beaufschlagt, wodurch eine Erwärmung und eine gleichzeitige Mischung und Bewegung des Polymer-Materials erfolgt. Die Erwärmung erfolgt dabei durch Umwandlung der beaufschlagten mechanischen Energie.

Die Zudosierung des Füllstoffes erfolgt meist im oberen Drittel des Reaktors. Dies ermöglicht eine ausreichende Verweilzeit, die zur Trocknung und Vermischung des Füllstoffes mit den Flakes genutzt werden kann. Es ist sowohl einen Eindosierung über als auch unter dem obersten Materiallevel möglich. Die Eindosierung unter dem obersten Materiallevel, insbesondere im unteren Drittel, ist bevorzugt.

Das erfindungsgemäße Verfahren kann mit verschiedenen bekannten Vorrichtungen durchgeführt werden: Die in den Druckschriften EP 123 771, EP 0 390 873, AT 396 900, AT 407 235, AT 407 970, AT 411 682, AT 411 235, AT 413 965, AT 413 673 oder AT 501 154 genau und spezifisch beschriebenen Vorrichtungen werden mitsamt all ihren vorteilhaften Ausgestaltungen in die vorliegende Offenbarung aufgenommen und stellen einen integralen Bestandteil der Offenbarung dar. Derartige Vorrichtungen werden auch in der Praxis eingesetzt und sind beispielsweise als "Erema Kunststoff Recycling System PC" oder als "ein- oder zweistufige Vacurema-Anlagen" bekannt.

Für die erfindungsgemäße Verfahrensführung ist dabei vorteilhaft, dass, bei entsprechender Verweilzeit, das Verfahren bei erhöhter Temperatur sowie ständigem Rühren geführt wird. Die Aufarbeitung erfolgt bei einer Temperatur unterhalb der Schmelztemperatur und vorzugsweise über der Glasübergangstemperatur, des Kunststoffmaterials, wobei das Polymermaterial gleichmäßig und stetig bewegt und durchmischt wird. Die Rieselfähigkeit des Material bleibt ständig erhalten. Dadurch wird das Kunststoffmaterial in einem Schritt kristallisiert, getrocknet und/oder gereinigt. Für ein gutes Endprodukt ist eine milde, aber stetige Bewegung des Polymer-Materials vorteilhaft. Dadurch wird das Verklumpen bzw. Verkleben des Materials im kritischen Temperaturbereich verhindert, bis eine ausreichende Kristallisierung der Oberfläche der Teilchen das Zusammenkleben der einzelnen Teilchen selbst verhindert. Außerdem ist durch die Bewegung eine höhere Prozesstemperatur möglich. Im Behandlungsbehälter wird bei der milden und stetigen Bewegung neben dem Hinanhalten von Verklebungen gleichzeitig dafür gesorgt, dass die Temperatur im Behälter ausreichend hoch wird bzw. bleibt und jedes Teilchen schonend auf die entsprechende Temperatur erwärmt wird bzw. beibehält. Gleichzeitig wird durch die Bewegung eine Ablösung der migrierenden Moleküle von der Oberfläche der Teilchen unterstützt.

Die genauen Parameter hängen vom zu behandelnden Polymermaterial ab: Die Temperatur bewegt sich etwa zwischen 70° bis 240°C, die Umfangsgeschwindigkeit des Mischwerkzeugs liegt in einem Bereich von etwa 2 bis 35 m/s. Es kann gegebenenfalls, d.h. bei empfindlichen Polymeren wie z.B. PET, ein Vakuum von ca. ≤ 150 mbar angelegt werden. Das Material und der Füllstoff verbleiben für eine mittlere Verweilzeit von etwa 10 min bis 200 min im Reaktor bevor sie verdichtet werden. Bei diesen Werten handelt es sich allerdings nur um grobe Richtwerte.

Das erfindungsgemäße Verfahren wird im folgenden anhand zweier vorteilhafter Ausführungsbeispiele exemplarisch dargestellt:

### Beispiel 1:

Abfallfolien aus Polyethylen mit einer Bedruckung von etwa 25 % ihrer Oberfläche mit einem Durchsatz von 400 kg/h werden in einen Schneidverdichter eingebracht, in dessen Inneren ein Misch- bzw. Zerkleinerungswerkzeug mit 650 Umdrehungen pro Minute rotiert. Die Misch- bzw. Rührwerkzeuge wirken auf das Material zerkleinernd und sorgen gleichzeitig dafür, dass das Material durch Reibung erwärmt wird und zwar auf eine Temperatur, die überhalb der Glasübergangstemperatur jedoch unterhalb der Schmelztemperatur, das heißt im Bereich knapp oberhalb der Vicat-Erweichungstemperatur von 85°C liegt. Im Schneidverdichter wird dadurch eine Mischthrombe ausgebildet. Durch die ständige Bewegung wird ein Verklumpen des Materials verhindert und die Polymerflakes bleiben ständig stückig und frei fließend. Die Flakes durchwandern den Schneidverdichter mit einer mittleren Verweilzeit von 8 - 15 min.

An den Schneidverdichter ist im unteren Bereich ein Extruder angeschlossen. Die Mischwerkzeuge fördern das erweichte Material in den Einzugsbereich des Extruders.

Weiters ist eine Pulverdosiereinrichtung am Schneidverdichter angeordnet und es werden 4 kg pro Stunde Calciumcarbonat zugeführt und zwar in einen unteren Bereich des Behälters, in dem das Material bereits in einem erweichten Zustand vorliegt. Alternativ kann die Zugabe auch von oben erfolgen. Der Füllstoff wird auf diese Weise mit dem erweichten Material innig und homogen vermischt und die Mischung anschließend im Extruder aufgeschmolzen, gegebenenfalls entgast, filtriert und granuliert.

### Beispiel 2:

Dieses Ausführungsbeispiel verläuft grundsätzlich analog zu Beispiel 1, jedoch mit einigen Unterschieden:
Abfallfolien aus Polypropylen mit einer Bedruckung von etwa 60 bis 80 % ihrer Oberfläche mit einem Durchsatz von 350 kg/h werden in einen Schneidverdichter eingebracht, in dessen Inneren ein Misch- bzw. Zerkleinerungswerkzeug mit 650 Umdrehungen pro Minute rotiert. Die Misch- bzw. Rührwerkzeuge wirken auf das Material zerkleinernd und sorgen gleichzeitig dafür, dass das Material durch Reibung erwärmt wird und zwar auf eine Temperatur, die überhalb der Glasübergangstemperatur jedoch unterhalb der Schmelztemperatur, das heißt im Bereich knapp oberhalb der Vicat-Erweichungstemperatur von 149°C liegt. Die Polymerflakes bleiben ständig freifließend. Die Flakes durchwandern den Schneidverdichter mit einer mittleren Verweilzeit von 8 - 15 min.

An den Schneidverdichter ist im unteren Bereich ein Extruder angeschlossen. Die Mischwerkzeuge fördern das erweichte Material in den Einzugsbereich des Extruders.

Weiters ist eine Pulverdosiereinrichtung am Schneidverdichter angeordnet und es werden 5-6 kg pro Stunde Calciumcarbonat zugeführt und zwar in einen unteren Bereich des Behälters, in dem das Material bereits in einem erweichten Zustand vorliegt. Alternativ kann die Zugabe auch von oben erfolgen.

Zusätzlich werden 2,8 kg/h, entsprechend etwa 0,8 Gew%, Calciumoxid CaO über die Pulverdosiereinrichtung zugegeben.

Calciumcarbonat und Calciumoxid werden auf diese Weise mit dem erweichten Material innig und homogen vermischt und die Mischung anschließend im Extruder aufgeschmolzen, gegebenenfalls entgast, filtriert und granuliert.

Bei diesen beiden Verfahrensführungen, die zwei im Recycling-Alltag häufige Szenarien darstellen, hat sich gezeigt, dass die Vorrichtungsteile merklich weniger angegriffen und korrodiert werden.

## Patentansprüche

1. Verfahren zur Neutralisierung von, im Zuge der Aufbereitung und Recyclierung von thermoplastischen, gegen hydrolytischen Abbau empfindlichen und hygroskopischen Polyester-Kunststoffen, insbesondere PET, entstehenden sauren und/oder basischen Abbau- bzw. Zersetzungsprodukten von Druckfarben, Klebstoffen oder organischen Verunreinigungen, wobei in einem ersten Schritt das zu recyclierende Polymermaterial in einem mit einer Misch- bzw. Zerkleinerungseinrichtung ausgestatteten Schneidverdichter vorgelegt wird und anschließend die Polymerteilchen im Schneidverdichter permanent bewegt und erwärmt werden, wobei zur Neutralisierung der entstehenden Abbau- bzw. Zersetzungsprodukte zu dem erweichten aber noch nicht aufgeschmolzenen Polymer zumindest ein fester, pulverförmiger, insbesondere mineralischer, Füllstoff, der üblicherweise zur Streckung bzw. als Streckmittel verwendet wird, beispielsweise Kreide, Kieselgur, Zinkoxid, Talkum, Aktivkohle und/oder ein Carbonat, insbesondere Calciumcarbonat, zugegeben wird,
wobei zumindest eine Teilmenge, vorzugsweise die gesamte Menge, des Füllstoffs zu dem auf eine Temperatur von über 30°C unterhalb seines VICAT-Erweichungspunktes gemessen mit einer Prüfkraft von 10 N, jedoch noch unterhalb seines Schmelzpunktes, erwärmten Polymers zugegeben wird, und zwar in einer Menge, die zumindest der zu erwartenden Säure- oder Basenbelastung entspricht, wobei die Mischung für eine bestimmte Verweilzeit permanent gemischt, bewegt, und gegebenenfalls zerkleinert, und stückig bzw. freifließend gehalten wird,
wobei chemische Trocknungsmittel oder mechanische Mittel zur Reduzierung der Restfeuchtigkeit in der Mischung und des hydrolytischen Abbaus der Polyester-Kunststoffe eingesetzt werden, wobei die Restfeuchte unter 100 ppm reduziert wird,
wobei die Behandlung in einem evakuierbaren Schneidverdichter unter Vakuumbedingungen von ≤ 150 mbar erfolgt,
und wobei das Material nach der Aufbereitung einem Verdichtungsschritt, insbesondere einem Aufschmelzen bzw. einer Extrusion, unterzogen wird,
wobei die Menge der zugegebenen Füllstoffe bei etwa 0,1 bis 15 Gew%, vorzugsweise zwischen 1 und 10 Gew%, liegt, wobei sich die Angaben in Gew% auf das Gesamtgewicht der Mischung aus Polymer und Füllstoffen beziehen,
und wobei als Füllstoff ein Füllstoff mit einer mittleren Korngröße bzw. einem D 50 Wert von weniger als 50 µm, insbesondere zwischen 2 und 15 µm, und mit einer spezifischen Oberfläche von 2 bis 11 m²/g, insbesondere 5 bis 9 m²/g, eingesetzt wird.

2. Verfahren nach Anspruch 1, **dadurch gekennzeichnet, dass** der Füllstoff oberflächlich unbehandelt ist und frei von einer Beschichtung, z.B. mit Stearinsäure, ist.

3. Verfahren nach Anspruch 2, **dadurch gekennzeichnet, dass** als Mittel zur Reduzierung der Feuchtigkeit mechanische Mittel eingesetzt werden, nämlich Vortrockner oder Vakuumanlagen.

4. Verfahren nach Anspruch 2, **dadurch gekennzeichnet, dass** als Mittel zur Reduzierung der Feuchtigkeit chemische Trocknungsmittel, insbesondere Calciumoxid, eingesetzt werden, wobei sich die eingesetzte Menge nach der zu erwarteten Restfeuchte richtet, wobei die Menge an Calciumoxid in einem Bereich zwischen 0,01 und 3 Gew% der Gesamtmischung liegt.

5. Verfahren nach Anspruch 4, **dadurch gekennzeichnet, dass** das chemische Trocknungsmittel zeitgleich mit dem Füllstoff dem Polymer zugegeben wird, insbesondere dass Calciumoxid gemeinsam mit Calciumcarbonat dem Polymer zugegeben wird.

6. Verfahren nach einem der Ansprüche 1 bis 5, **dadurch gekennzeichnet, dass** die Abbau- bzw. Zersetzungsprodukte durch thermischen, oxidativen und/oder photochemischen bzw. strahlungsinduzierten Abbau der Polymere, z.B. von Sperrschichtlaminaten in Mehrschichtfolien, z.B. Ethylenvinylacetat (EVA), Ethylenvinylalkohol (EVOH), Polyvinylidenchlorid (PVDC) etc., und/oder der im zu recyclierenden Polymer enthaltenen Additive oder Hilfsstoffe, insbesondere durch Klebstoffe, Druckfarben etc., gebildet werden.

7. Verfahren nach einem der Ansprüche 1 bis 6, **dadurch gekennzeichnet, dass** die zu neutralisierenden Verbindungen anorganische Säuren, z.B. Salzsäure oder Salpetersäure, oder organische Säuren, z.B. Essigsäure, sind.

## Claims

1. Method for neutralising acidic and/or basic degradation or decomposition products of printing inks, adhesives or organic impurities, produced in the course of the processing and recycling of thermoplastic polyester plastics that are sensitive to hydrolytic and hygroscopic degradation, especially PET, wherein, in a first step, the polymeric material to be recycled is placed in a mixing and crushing device equipped with a cutting compressor, and then the polymer particles in the cutter compactor are continuously moved and heated, wherein at least a solid powdery, in particular mineral, filler that is normally used for extending, or as an extending agent, for example, chalk, diatomaceous earth, zinc oxide, talc, activated carbon and/or a carbonate, particularly calcium carbonate, is added to the softened not-yet-melted polymer for the neutralisation of the resulting degradation or decomposition products,
wherein at least a portion, preferably the entire amount, of the filler is added to the heated polymer at a temperature of more than 30°C below its VICAT softening point with a test force of 10 N, but still below its melting point, and in an amount that corresponds to at least the expected acid or base load, wherein the mixture is continuously mixed, moved, and optionally crushed for a certain residence time, and is held in lumps or free flowing,
wherein a chemical drying agent or mechanical means are used for reducing the residual moisture in the mixture and for the hydrolytic degradation of the polyester plastics, wherein the residual moisture is reduced to below 100 ppm,
wherein the processing is carried out in an evacuable cutting compressor under vacuum conditions of ≤150 mbar,
and wherein, following the processing, the material is subjected to a compression step, in particular a melting or extrusion step,
wherein the amount of the added fillers is from about 0.1 to 15 wt.-%, preferably between 1 and 10 wt.-%, wherein the information in wt.-% relates to the total weight of the mixture of polymer and fillers,
wherein the filler used is a filler with an average grain size or a D 50 value of less than 50 µm, in particular between 2 and 15 µm, and having a specific surface of 2 to 11 m2/g, particularly 5 to 9 m2/g.

2. Method according to claim 1 **characterised in that** the filler has an untreated surface and is free from a coating, e.g. with stearic acid.

3. Method according to claim 2, **characterised in that** mechanical means are used as the means for reducing the moisture, namely pre-dryers or vacuum systems.

4. Method according to claim 2, **characterised in that** a chemical drying agent is used as the means for reducing the moisture, in particular calcium oxide, wherein the amount used depends on the expected residual moisture, wherein the amount of calcium oxide lies in a range between 0.01 and 3 wt.-% of the total mixture.

5. Method according to claim 4, **characterised in that** chemical drying agent is added to the polymer at the same time as the filler, in particular that calcium oxide is added the polymer together with calcium carbonate.

6. Method according to one of claims 1 to 5, **characterised in that** the degradation or decomposition products are formed by thermal, oxidative and/or photochemical or radiation-induced degradation of the polymers, for example, of barrier laminates in multilayer films, e.g. ethylene vinyl acetate (EVA), ethylene vinyl alcohol (EVOH), polyvinylidene chloride (PVDC), etc. and/or they are also formed by the degradation of the additives or excipients contained in the polymer to be recycled, in particular through adhesives, printing inks, etc.

7. Method according to one of the claims 1 to 6, **characterised in that** the compounds to be neutralised are inorganic acids, e.g. hydrochloric acid or nitric acid, or organic acids, e.g. acetic acid.

## Revendications

1. Procédé de neutralisation de produits de dégradation ou de décomposition acides et/ou basiques d'encres d'imprimerie, d'adhésifs ou d'impuretés organiques, qui se forment au cours de la préparation et du recyclage de plastiques de polyester thermoplastiques, sensibles à une dégradation hydrolytique et hygroscopiques, en particulier le PET, dans lequel, dans une première étape, le matériau polymère à recycler est placé dans un compacteur-déchiqueteur équipé d'un appareil de mélange ou de broyage, puis les particules polymères sont soumises à un mouvement permanent dans le compacteur-déchiqueteur et sont chauffées, dans lequel, pour la neutralisation des produits de dégradation ou de décomposition qui se forment, pour obtenir le polymère ramolli mais non encore fondu, on ajoute au moins une matière de charge solide, pulvérulente, en particulier minérale, qui est utilisée habituellement pour une dilution ou en tant que diluant, par exemple la craie, le kieselguhr, l'oxyde de zinc, le talc, le charbon actif et/ou un carbonate, en particulier le carbonate de calcium,
dans lequel on ajoute au moins une quantité partielle, de préférence la totalité, de la matière de charge au polymère chauffé à une température de plus de 30 °C inférieure à son point de ramollissement de VICAT, mesurée avec une force d'essai de 10 N, mais encore en-dessous de son point de fusion, et plus précisément en une quantité qui correspond au moins à la charge acide ou basique prévisible, le mélange étant soumis à un mélange, un mouvement et éventuellement un broyage permanents pendant un certain temps, et étant maintenu granulaire ou à écoulement libre,
dans lequel des agents déshydratants chimiques ou des moyens mécaniques sont utilisés pour réduire l'humidité résiduelle dans le mélange et la dégradation hydrolytique des plastiques polyester, l'humidité résiduelle étant réduite à moins de 100 ppm, dans lequel le traitement a lieu dans un compacteur déchiqueteur dans lequel on peut faire le vide, dans des conditions de vide de ≤150 mbar,
et dans lequel le matériau est, après préparation d'une étape de compactage, soumis en particulier à une fusion ou à une extrusion,
dans lequel la quantité des matières de charge ajoutées est d'environ 0,1 à 15 % en poids, de préférence comprise entre 1 et 10 % en poids, les indications de pourcentage en poids étant rapportées au poids total du mélange du polymère et des matières de charge,
et dans lequel on utilise en tant que matière de charge une matière de charge ayant une granulométrie moyenne ou une valeur D 50 inférieure à 50 µm, en particulier comprise entre 2 et 15 µm, et ayant une aire spécifique de 2 à 11 m²/g, en particulier de 5 à 9 m²/g.

2. Procédé selon la revendication 1, **caractérisé en ce que** la matière de charge est non traitée en surface et est exempte de revêtement, p.ex. d'acide stéarique.

3. Procédé selon la revendication 2, **caractérisé en ce que** des moyens mécaniques sont utilisés comme moyens pour la réduction de l'humidité, notamment des préséchoirs ou des systèmes sous vide.

4. Procédé selon la revendication 2, **caractérisé en ce que** des agents déshydratants chimiques, en particulier de l'oxyde de calcium, sont utilisés comme moyens pour la réduction de l'humidité, la quantité utilisée étant déterminée en fonction de l'humidité résiduelle prévisible, la quantité d'oxyde de calcium étant dans une plage comprise entre 0,01 et 3 % en poids par rapport au mélange total.

5. Procédé selon la revendication 4, **caractérisé en ce que** l'agent déshydratant chimique est ajouté au polymère en même temps que la matière de charge, en particulier **en ce que** l'oxyde de calcium est ajouté au polymère en même temps que du carbonate de calcium.

6. Procédé selon l'une quelconque des revendications 1 à 5, **caractérisé en ce que** les produits de dégradation ou de décomposition sont formés par dégradation thermique, par oxydation et/ou photochimique ou induite par un rayonnement, des polymères, p.ex. de stratifiés à couche d'arrêt dans des feuilles multicouches, p.ex. l'éthylène-acétate de vinyle (EVA), l'éthylène- alcool vinylique (EVOH), le poly(chlorure de vinylidène) (PVDC), etc., et/ou des additifs ou adjuvants contenus dans le polymère à recycler, en particulier par des adhésifs, des encres d'imprimerie, etc.

7. Procédé selon l'une quelconque des revendications 1 à 6, **caractérisé en ce que** les composés à neutraliser sont des acides organiques, p.ex. l'acide chlorhydrique ou l'acide nitrique, ou des acides organiques, p.ex. l'acide acétique.
